Europäisches Patentamt

European Patent Office

Office européen des brevets

(11) Publication number: **0 346 489**

**A1**

(12) # EUROPEAN PATENT APPLICATION

published in accordance with Art. 158(3) EPC

(21) Application number: **89900654.8**

(22) Date of filing: **19.12.88**

Data of the international application taken as a basis:

(86) International application number:
**PCT/JP88/01282**

(87) International publication number:
**WO89/06401 (13.07.89 89/15)**

(51) Int. Cl.³: **G 06 F 15/64**
**G 06 F 12/00**

(30) Priority: **26.12.87 JP 330905/87**

(43) Date of publication of application:
**20.12.89 Bulletin 89/51**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **OTSUKA, Shoichi Fanuc Mansion Harimomi**
**7-302**
**3539-1, Shibokusa Oshino-mura**
**Minamitsuru-gun Yamanashi 401-05(JP)**

(72) Inventor: **MURAOKA, Yutaka Fanuc Dai-3**
**Vira-karamatsu**
**3527-1, Shibokusa Oshino-mura, Minamitsuru-gun**
**Yamanashi 401-05(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **ADDRESS CONVERSION CIRCUIT.**

(57) An address conversion circuit quickly designates an address for making access to a memory from a CPU when the data specified by an n-dimensional address is to be processed. In order to make access to, for example, predetermined two-dimensional image data by specifying two-dimensional addresses from an arithmetic unit having an inherent scanning direction, the circuit includes two conversion means (1, 2) each for converting an address of a particular dimension into an inverse logic, exchange means (3) for exchanging addresses among addresses of said dimensions, and scanning direction determining means (4) for determining the scanning direction at the time of making access to said predetermined data, wherein the scanning direction can be arbitrarily determined for the two-dimensional addresses in the memory.

./...

Croydon Printing Company Ltd.

Fig. 1

0346489

-1-

## DESCRIPTION

### ADDRESS CONVERTING CIRCUIT

Technical Field

This invention relates to an address converting circuit having an address converting function regarding a multi-dimensional address space in a memory.

Background Art

In a case where an ordinary image memory is accessed and image data stored by a two-dimensional array are mapped in the address space of a CPU, and assuming that the element array in the memory space is in the form of n rows x n columns, the element at row i, column j is arranged so as to correspond to an address $a_{11} + n(i-1) + j - 1$ of a head element designated from an address line of the CPU. This mapping method is such that when the CPU has a scanning direction peculiar to the apparatus, the array elements can be scanned by changing the row direction, namely the parameter j. Accessing can be performed sequentially at high speed if use is made of, say, a host increment function, which is one addressing mode of a CPU. However, if the array elements in the column direction are scanned by the CPU, it is required that address computations be performed by the CPU and, hence, the processing speed thereof declines considerably. In addition, depending upon the CPU, the speed at forward scanning differs from that at reverse scanning.

-2-

When an assembly machining operation is performed by an industrial robot with such a conventional address converting system, a problem that arises is low processing speed in a case where an image from a camera serving as a robot eye is inputted to a memory and the resulting image data is subjected to processing such as feature extraction and then utilized in robot control.

More specifically, when two-dimensionally arrayed data of an image or the like has its contents scanned by a CPU for the purpose of feature extraction, this can be carried out comparatively simply and speedily in a certain direction, but the speed declines when scanning is performed in another direction. In such case, the conventional approach is to provide a plurality of memories and start processing after first converting the data storage format in accordance with the processed contents of the image. Even in this case the prior processing speed of the CPU is not sufficient for coping with a robot operation.

Disclosure of the Invention

The present invention has been devised in order to solve the foregoing problems and its object is to provide an address converting circuit in which sequential scanning can be carried out at a uniform speed regardless of the direction of address data in an n-dimensional orthogonal memory space, thereby affording versatility in accessing from a CPU when performing image processing, and making it possible to raise data processing speed.

In accordance with the present invention, there can be provided an address converting circuit disposed between an address signal line and a memory in order to access prescribed data in the memory by specifying an n-dimensional address from a processing unit having a scanning direction peculiar to the unit, comprising converting means for converting a specific dimensional address into inverted logic, exchanging means for performing an address exchange between each of said dimensional addresses, and scanning direction deciding means for deciding scanning direction when accessing said prescribed data.

Accordingly, the address converting circuit of the present invention is such that scanning direction with respect to an n-dimensional address in a memory can be decided at will by designating a scanning direction, which is specific to the processing unit, from the processing unit.

Brief Description of the Drawings

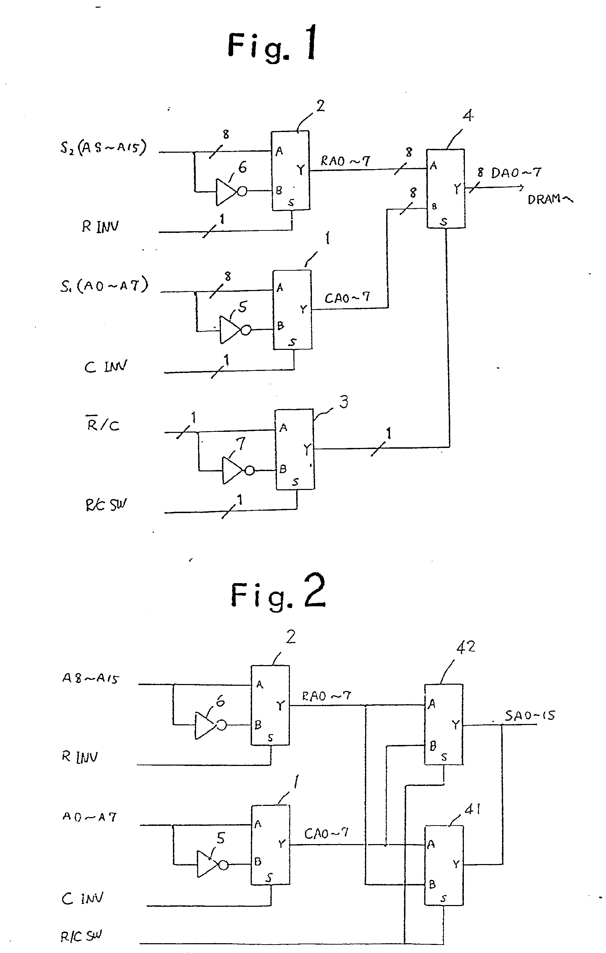

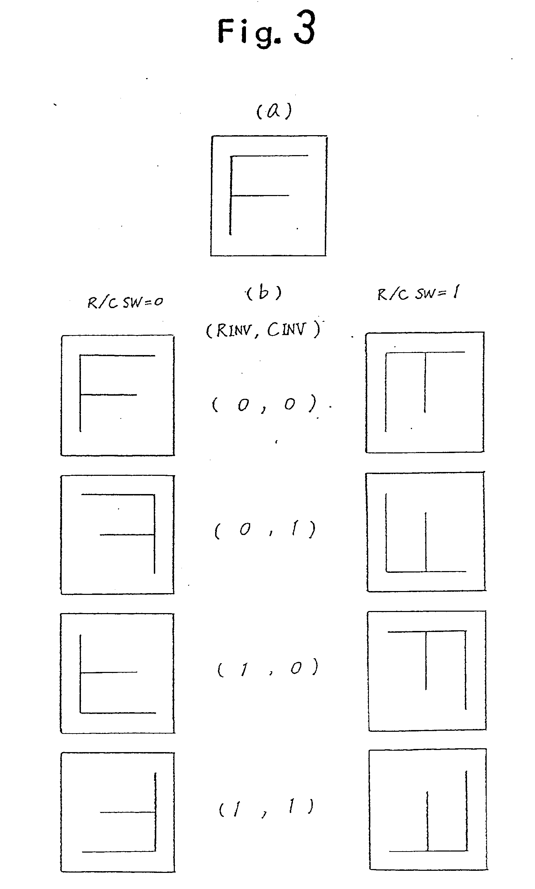

Fig. 1 is a block diagram illustrating an embodiment of the present invention, Fig. 2 is a block diagram illustrating a second embodiment, and Figs. 3(a), (b) are views illustrating an original image of data stored in a storage area, as well as eight types of images hypothesized by setting scanning direction.

Best Mode for Carrying Out the Invention

An embodiment of the present invention will now be described in detail with reference to the drawings.

Fig. 1 is a block diagram illustrating an example of an address converting circuit when accessing image data stored in an address space of a dynamic RAM (hereinafter referred to as a "DRAM") by 16-bit addressing. Numerals 1 through 4 denote selector circuits. From address lines A0 - A15 of a CPU address bus, address data $S_1$ of the first eight bits A0 - A7 enter the first selector circuit 1, and address data $S_2$ of the next eight bits A8 - A15 enter the second selector circuit 2. The address lines A0 - A15 enable the CPU to uniquely specify a predetermined element (pixel) of image data in a memory. The select terminals S of the selector circuits 1, 2 are respectively supplied with a column scanning direction conversion command CINV and a row scanning direction conversion command RINV. The address lines are connected to B input terminals of the selector circuits 1, 2 via inverters 5, 6 in order to invert the eight-bit address data $S_1$, $S_2$, respectively.

The A input terminal of the selector circuit 3 is supplied with a select command $\overline{R/C}$ which designates the row address data $S_1$ and column address data $S_2$ of the address lines A0 - A15, and the B input terminal is supplied with the select command R/C via an inverter 7. The select terminal S of selector circuit 3 is supplied with an RC swap command R/C SW for commanding an exchange between $S_1$ and $S_2$. The control signals

supplied as the commands RINV, CINV, R/C SW can each be realized by one-bit data (a so-called digital output) delivered by the CPU, or by using the higher order addresses (bits 16 - 18) of the addresses of the memory.

Each of the selector circuits 1, 2, 3 provides an exclusive OR logical output, namely

$$Y = A\overline{S} + BS$$

as its output Y. Accordingly, with regard to the output signals CA0 - 7 of selector circuit 1, the row address data $S_1$ is outputted as is if the conversion command CINV = 0, and the data $S_1$ of the row address lines A0 - A7 is outputted upon being inverted if the conversion command CINV = 1.

The A, B input terminals of the selector circuit 4 are respectively supplied with eight-bit address signals of row addresses RA0 - 7 and column addresses CA0 - 7, and the second command $\overline{R}/C$ from selector circuit 3 enters its select terminal S. As a result, when the RC swap command R/C SW = 0, the selector circuit 4 delivers the row addresses RA0 - 7, from among the outputs of the first and second selector circuits 1, 2, at the timing of select command $\overline{R}/C = 0$, and the column addresses CA0 - 7 at the timing of the select command $\overline{R}/C = 1$. These are outputted to the DRAM as respective time-shared address signals DA0 - 7. When the RC swap command R/C SW = 1, the outputs of the first and second selector circuits 1, 2 are interchanged. When R/C SW = 0 holds, the address signals DA0 - 7 to the DRAM are outputted at the reverse timing.

Fig. 2 is a block diagram illustrating a second embodiment of the invention. Whereas the address converting circuit having the foregoing construction is for addressing a DRAM, the example of the address converting circuit illustrated here is used for a static RAM. In this case, the select command $\overline{R}/C$ is not used, unlike the case in which the DRAM is addressed. Therefore, the selector circuit 4 is split into two selector circuits 41, 42 to form 16-bit address signals CA0 - 15.

Fig. 3 shows the manner in which data stored in a storage area, e.g., image data regarding the letter of the alphabet "F", is converted and read out by the three-bit control data RINV, CINV, R/C SW. Fig.· 3(a) shows the state in which the original image is actually stored, and (b) shows eight types of outputted data images.

If the optimum scanning direction of the CPU is from top to bottom in the row direction and from left to right in the column direction, accessing from the CPU is possible at a scanning speed in the column direction which is the same as that in the row direction, without modifying the storage format of the original image, by forming RAM addresses by eight types of converted images. Scanning in the reverse direction at a speed the same as that in the forward direction is made possible with regard to the abovementioned two row and column directions.

Even if the elements of the image are thus scanned in the row direction, column direction and in the forward and reverse directions, the CPU is capable of performing access at all times by sequential scanning in ascending order, by way of example, as far as designating memory addresses is concerned. Therefore, the CPU performance obtained with regard to a scanning direction (e.g., forward scanning in the row direction) for optimum speed and optimum ease in the absence of this converting circuit can also be obtained in the remaining three scanning directions by applying the present circuit.

Though the present invention has been described with regard to two-dimensional data in relation to the two illustrated embodiments, the invention is capable of being constructed in various ways within the spirit and scope of the claims and, in the absence of special circumstances, is not intended to be limited to the particulars set forth in the detailed description.

Specifically, the present invention will possess the same advantages even in a case where the physical addresses of a memory arrayed in n dimensions ($n \geq 3$) are designated.

Industrial Applicability

The address converting circuit of the present invention is such that row and column processing at uniform speed is facilitated by performing an address conversion at a stage prior to connection of upper and lower halves of the address bus of a CPU to the address input of a memory. By converting these upper and lower halves into inverted logic individually, scanning direction can be decided at the time of data access so as to facilitate processing at uniform speed in the forward and reverse directions.

0346489

CLAIMS:

1. An address converting circuit disposed between an address signal line and a memory in order to access prescribed data in the memory by specifying an n-dimensional address from a processing unit having a scanning direction peculiar to the unit, comprising:

n-number of converting means for converting a specific dimensional address into inverted logic;

exchanging means for performing an address exchange between each of said dimensional addresses; and

scanning direction deciding means for deciding scanning direction when accessing said prescribed data.

2. An address converting circuit according to claim 2, characterized in that said converting means performs an exclusive-OR logical operation between a corresponding address signal line and a respective scanning direction conversion command.

3. An address converting circuit according to claim 1, characterized in that said exchanging means performs the address exchange by a swap command which commands an exchange between two addresses.

4. An address converting circuit according to claim 1, characterized in that said scanning direction deciding means decides the scanning direction in accordance with an optimum direction decided in dependence upon the contents of image data.

Fig. 1

Fig. 2

# Fig. 3

(a)

R/C SW = 0    (b)    R/C SW = 1

(RINV, CINV)

( 0 , 0 )

( 0 , 1 )

( 1 , 0 )

( 1 , 1 )

# INTERNATIONAL SEARCH REPORT

International Application No  PCT/JP88/01282

## I. CLASSIFICATION OF SUBJECT MATTER (if several classification symbols apply, indicate all) 6

According to International Patent Classification (IPC) or to both National Classification and IPC

Int. Cl⁴    G06F15/64, 12/00

## II. FIELDS SEARCHED

Minimum Documentation Searched 7

| Classification System | Classification Symbols |
|---|---|
| IPC | G06F15/64, 15/66, 12/00 |

Documentation Searched other than Minimum Documentation
to the Extent that such Documents are Included in the Fields Searched 8

| | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 62-249283 (Casio Computer Co., Ltd., Casio Denshi Kogyo Kabushiki Kaisha) 30 October 1987 (30. 10. 87) (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 23, 1989 (23. 01. 89) | February 6, 1989 (06. 02. 89) |

| International Searching Authority | Signature of Authorized Officer |
|---|---|
| Japanese Patent Office | |

Form PCT ISA 210 (second sheet) (January 1985)